# EUROPEAN PATENT SPECIFICATION

(11) **EP 1 925 810 B1**
(45) Date of publication and mention of the grant of the patent: **22.07.2015**
(21) Application number: 07254487.7
(22) Date of filing: 16.11.2007
(51) Int. Cl.: F02M 35/116

(54) **Vehicle**
Fahrzeug
Véhicule

(30) Priority: 24.11.2006 JP 2006316459
(43) Date of publication of application: 28.05.2008
(73) Proprietor: Yamaha Hatsudoki Kabushiki Kaisha, Shizuoka-ken Shizuoka 438-8501 (JP)
(72) Inventor: Fujimura, Katsumi, Iwata-shi, Shizuoka-ken 438-8501 (JP)
(74) Representative: Zimmermann, Tankred Klaus

(56) References cited:
- EP-A1- 1 293 653
- EP-A2- 1 655 464
- DE-A1-102004 030 023
- GB-A- 2 286 015
- JP-A- H02 223 632

## Description

The present invention relates to a vehicle, and more particular, to a vehicle provided with an intake duct (otherwise known as a funnel), through which air is led to an intake port of an engine.

Conventionally, there is known an intake device provided with an intake inertial pipe (funnel), through which air is led to an intake port of an engine (see, for example, JP-UM-A-56-2023). JP-UM-A-56-2023 discloses an intake device for internal combustion engines, comprising an intake inertial pipe including three stationary pipes (stationary funnels) fixed to an intake muffler (case section), three intermediate extension pipes (moving funnels), which slide on outer peripheries of the three stationary pipes, and three extension pipes (moving funnels), which slide on outer peripheries of the intermediate extension pipes, a plate-shaped flange section (funnel holding section), to which the three intermediate extension pipes, respectively, are fixed, a horn-shaped suction section (funnel holding section), to which the three extension pipes, respectively, are fixed, a screw shaft (ball screw) for movement of the flange section and the horn-shaped suction section, a screw-shaft drive gear for rotation of the screw shaft, and a dc motor (drive source) for driving of the screw-shaft drive gear. As the dc motor drives, the screw shaft is rotated whereby the flange section and the horn-shaped suction section of the intake inertial pipe are moved. The three intermediate extension pipes and the three extension pipes slide on straight extensions of the three stationary pipes to change a length of the intake inertial pipe. The screw shaft is provided to extend in a direction, in which the intake inertial pipe is changed in length, and a length of the screw shaft is larger than a length of the intake inertial pipe at the maximum. The screw-shaft drive gear is provided integrally at an end of the screw shaft and the dc motor for driving of the screw-shaft drive gear is arranged on the vicinity of an extension of the end of the screw shaft.

With the construction disclosed in JP-UM-A-56-2023, however, the dc motor (drive source) for driving of the screw-shaft drive gear is arranged in the vicinity of an extension of the end of the screw shaft, which is larger in length than that in the case where a length of the intake inertial pipe (funnel) becomes maximum, so that there is caused a problem that the intake device becomes large in size in a direction, in which the intermediate extension pipes (moving funnels) and the extension pipes (moving funnels) of the intake inertial pipe are moved straight.

EP 1 655 464 A2 relates to an engine comprising an introduction port through which air is introduced into an intake chamber, an intake passage, which includes an opening opened into the intake chamber and through which the air in the intake chamber is led from the opening to a combustion chamber, an injector that jets fuel between the introduction port and the opening, an exhaust passage, through which combustion gases are led from the combustion chamber, and a control mechanism configured to vary torque characteristics by making use of pressure waves generated in at least one of the intake passage and the exhaust passage so as to eliminate valleys in a torque characteristic curve indicating a change in torque relative to a change in engine speed

### SUMMARY

It is an object of the invention to provide a vehicle capable of reducing size in a direction in which moving funnels are moved.

This is achieved by a vehicle according to claim 1.

One aspect of the invention provides a vehicle comprising an engine having an intake port, a stationary intake duct through which air is led to the intake port of the engine, a moving intake duct arranged movably on an intake side of the stationary intake duct and cooperating with the stationary intake duct to lead air to the intake port of the engine, an intake duct moving mechanism including a turning member for movement of the moving intake duct, and a drive source for driving of the turning member of the intake duct moving mechanism, the moving intake duct is moved straight (linearly) in a predetermined direction between a first position, in which an opening of the moving intake duct toward the stationary intake duct is separated from an opening of the stationary intake duct on an intake side, and a second position, in which the opening of the moving intake duct toward the stationary intake duct abuts against the opening of the stationary intake duct on the intake side, and a direction, in which the drive source and the turning member are arranged, intersects a predetermined direction being a direction in which the moving intake duct is moved.

Such a vehicle can be constructed so that a direction, in which the drive source and the turning member are arranged, intersects a predetermined direction being a direction, in which the moving intake duct is moved, as described above, whereby the dimensions in a direction, in which the moving intake duct is moved, can be reduced compared to the case where a drive source is arranged on an extension in a predetermined direction being a direction, in which the moving intake duct is moved. The moving intake duct is moved in a substantially straight line between a first position, in which an opening of the moving intake duct toward the stationary intake duct is separated from an opening of the stationary intake duct on an intake side, and a second position, in which the opening of the moving intake duct toward the stationary intake duct abuts against the opening of the stationary intake duct on the intake side, whereby flow of air passing through the moving intake duct to be drawn into the stationary intake duct can be made straight (linear) even when the opening of the moving intake duct toward the stationary intake duct is separated from the opening of the stationary intake duct on the intake side. Thereby, it is possible to inhibit or avoid flow of air from being obstructed. Consequently, it is possible to inhibit or avoid a decrease in intake efficiency in the case where the moving intake duct is separated from the stationary intake duct.

An example of such a vehicle comprises a case section, in which the stationary intake duct, the moving intake duct, and the intake duct moving mechanism are arranged, and an air filter section for purification of air flowing into the case section, and the air filter section is arranged on an opposite side to a side of the case section, on which the drive source is arranged. With such construction, the drive source can be arranged in a position distant from the air filter section, so that it is possible to form a space in a region around the air filter section, through which air passes. Thereby, since flow of air in a region around the air filter section can be inhibited from being obstructed, it is possible to inhibit flow of air flowing into the case section from the air filter section from being obstructed.

In an example of such a vehicle in which the air filter section is arranged on an opposite side to a side on which the drive source is arranged, the drive source, the case section, and the air filter section can be arranged linearly in a longitudinal direction of the vehicle. With such construction, it is possible to readily inhibit a vehicle width from becoming large in a direction perpendicular to a travel direction.

In such a case, a duct section can further be provided to have air flowing into the case section through the air filter section, the air filter section and the duct section being arranged rearwardly of the case section in a travel direction, and the drive source being arranged forwardly of the case section in the travel direction. With such construction, even in the case where the air filter section is arranged rearward in the travel direction to make it difficult to directly let air thereinto, air can be easily fed since the duct section forms a passage, through which air is caused to flow into the case section from rearward in the travel direction.

An exmple of a vehicle in which the duct section is provided, can further comprise intake ducts, through which air is let thereinto from outside the vehicle, and the intake ducts can be provided laterally of the case section in the travel direction to have air flowing into the duct section. With such construction, air passing through the intake duct to inflow in the travel direction can be made to flow directly into the duct section, so that intake efficiency for air flowing into the case section can be improved.

In such a case, the intake ducts can be provided on both left and right sides of the case section in the travel direction. With such construction, by providing the intake ducts on both left and right sides that are different from a front side on which the drive source is arranged, obstruction of a flow of air into the intake ducts can be readily inhibited.

In an example vehicle in which the air filter section is arranged on an opposite side to a side on which the drive source is arranged, the drive source can be arranged outside the case section. With such construction, it is not required that electric wiring for driving of the drive source, or the like is arranged inside the case section. Thereby, in the case where evaporated gasoline enters into the case section, the evaporated gasoline entering into the case section can be inhibited from deteriorating the electric wiring.

The drive source can include a drive shaft connected to the intake duct moving mechanism and a hole, into which the drive shaft is inserted, can be provided on a side of the case section, on which the drive source is arranged. With such construction, the drive shaft for driving of the intake duct moving mechanism can be readily arranged inside the case section.

An example vehicle provided with a hole, into which the drive shaft is inserted, can comprise a sealing member provided between the drive shaft and the hole. With such construction, air mixed with dust, which does not pass through the air filter section, can be inhibited from flowing into the case section from a gap between the drive shaft and the hole of the case section, so that air mixed with dust, etc. can be inhibited from flowing into the engine.

In an example vehicle, the drive source can include a drive shaft connected to the turning member and the drive shaft can be arranged to extend in a direction intersecting the predetermined direction being a direction, in which the moving intake duct is moved. With such construction, the drive shaft extends in a direction intersecting the predetermined direction, so that it is possible to inhibit a large size in a predetermined direction being a direction, in which the moving intake duct is moved.

In such a case, the turning member can be connected coaxially to the drive shaft. With such construction, it is possible to easily turn the turning member.

In an example vehicle, the stationary intake ducts and the moving intake ducts, respectively, can be provided in plural, the intake duct moving mechanism can include an intake duct holding section which holds the moving intake ducts, and the intake duct holding section can be moved straight (linearly) in the predetermined direction whereby the moving intake ducts are moved straight between the first position and the second position. With such construction, the intake duct holding section is moved straight whereby the moving intake ducts held on the intake duct holding section can be readily moved straight at a time. Thereby, even in the case where a plurality of the moving intake ducts are arranged on the intake duct holding section, there is no need for a construction, in which the moving intake ducts are moved straight (linearly) one by one. Thereby, the intake duct moving mechanism for straight movement of the moving intake ducts can be inhibited from becoming complex.

With the vehicle, in which the intake duct holding section is moved straight (linearly) in a predetermined direction, preferably, the intake duct moving mechanism further includes a spindle extending straight in a direction, in which the air passage, through which air from the stationary intake ducts passes, extends, and the intake duct holding section is moved along the spindle in a direction, in which the spindle extends. With such construction, the intake duct holding section can be readily moved straight by the spindle, so that it is possible to readily move the moving intake ducts straight.

In an example vehicle in which the intake duct holding section is provided with the spindle, the spindle and the turning member can intersect each other as viewed from laterally of the vehicle. With such construction, it is not necessary to arrange the turning member in a direction, in which the spindle extends, so that a large size in the direction in which the spindle extends can be inhibited.

In an example vehicle in which the intake duct holding section is provided with the spindle, the intake duct moving mechanism can further include a moving member moving along the spindle in a direction in which the spindle extends, together with the intake duct holding section, and the turning member driven by the drive source can include a lever member supporting the moving member movably in the direction in which the spindle extends. With such construction, rotational motion of the drive source can be converted by the turning member and the spindle driven by the drive source into linear motion, in which the moving member is moved straight (linearly), so that it is possible to readily move the moving member straight along the spindle. Thereby, as the moving member is moved, the intake duct holding section can be readily moved straight (linearly) .

An example vehicle can further comprise a throttle body arranged between an intake port of the engine and an opening of the stationary intake duct toward the engine, and an air passage of the moving intake duct, through which the air passes, an air passage of the stationary intake duct, through which the air passes, and an air passage of the throttle body, through which the air passes, are formed and connected so as to be substantially aligned. With such construction, flow of air passing to the intake port of the engine from the moving intake duct and the stationary intake duct can be made straight (linear), so that it is possible to inhibit flow of air from being obstructed. Thereby, it is possible to further inhibit a decrease in intake efficiency.

### BRIEF DESCRIPTION OF THE DRAWINGS

An embodiment of the invention will be described hereinafter, by way of example only, with reference to the drawings.
Fig. 1 is a side view showing a whole construction of a motorcycle according to an embodiment of the invention.
Fig. 2 is a perspective view showing a neighborhood of a cleaner box of the motorcycle shown in Fig. 1.
Fig. 3 is a plan view showing a neighborhood of a cleaner box of the motorcycle shown in Fig. 1.
Fig. 4 is a partial, cross sectional view showing a neighborhood of a cleaner box of the motorcycle shown in Fig. 1.
Fig. 5 is a cross sectional view showing a state, in which moving intake ducts of the motorcycle shown in Fig. 1 are moved to separated positions.
Fig. 6 is a cross sectional view showing a state, in which the moving intake ducts of the motorcycle shown in Fig. 1 are moved to abutment positions.
Fig. 7 is a front view showing a state, in which lever members of the motorcycle shown in Fig. 1 are engaged by a moving member.
Fig. 8 is a plan view showing an intake duct holding section of the motorcycle shown in Fig. 1.
Fig. 9 is a cross sectional view showing a state, in which the moving intake ducts of the motorcycle shown in Fig. 1 are moved to separated positions.
Fig. 10 is a cross sectional view showing a state, in which the moving intake ducts of the motorcycle shown in Fig. 1 are moved to separated positions.
Fig. 11 is a cross sectional view showing a state, in which the moving intake ducts of the motorcycle shown in Fig. 1 are moved to abutment positions.
Fig. 12 is a cross sectional view showing a state, in which the moving intake ducts of the motorcycle shown in Fig. 1 are moved to abutment positions.
Fig. 13 is a cross sectional view illustrating the structure of a moving member of an intake duct moving mechanism shown in Fig. 9.
Fig. 14 is a cross sectional view illustrating the structure of a moving member of an intake duct moving mechanism shown in Fig. 10.
Fig. 15 is a cross sectional view illustrating the structure of a moving member of an intake duct moving mechanism shown in Fig. 11.
Fig. 16 is a cross sectional view illustrating the structure of a moving member of an intake duct moving mechanism shown in Fig. 12.

### DETAILED DESCRIPTION

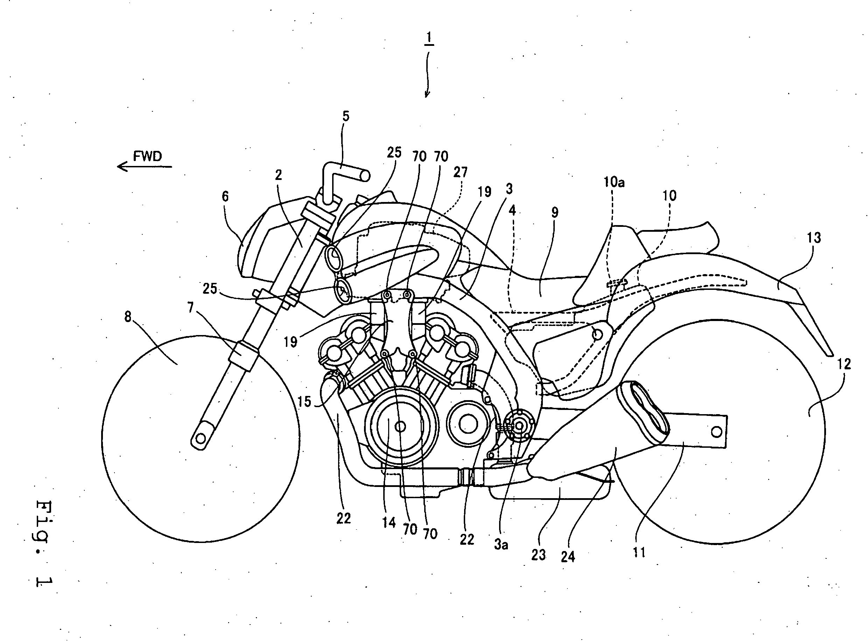

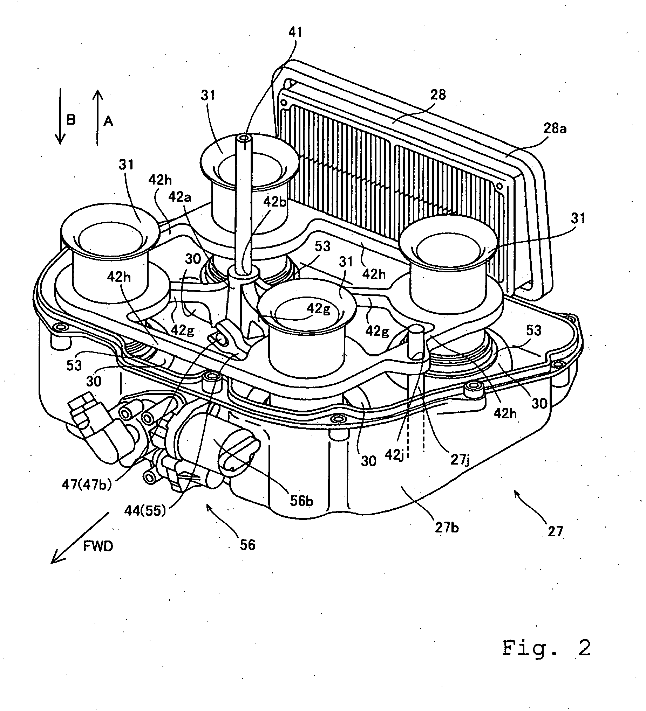

An embodiment of the invention will be described below with reference to the drawings, in which Fig. 1 is a side view showing a whole construction of a motorcycle according to an embodiment of the invention and Figs. 2 to 16 are views illustrating, in detail, a construction of a cleaner box of the motorcycle shown in Fig. 1. The embodiment illustrates a motorcycle as an example of a vehicle according to the invention. In the drawings, an arrow FWD indicates the front in a travel direction of a motorcycle. First, a construction of the motorcycle according to the embodiment will be described with reference to Figs. 1 to 16.

In the motorcycle 1 according to the embodiment of the invention, a main frame 3 extending longitudinally is arranged rearwardly of a head pipe 2 as shown in Fig. 1. A rear frame 4 extending rearwardly upward is connected to a rear portion of the main frame 3. The head pipe 2, the main frame 3, and the rear frame 4 constitute a body frame.

A handle 5 is mounted to an upper portion of the head pipe 2 to be able to turn. A headlamp 6 is provided forwardly of the head pipe 2. A pair of front forks 7 having suspensions for absorbing of a vertical shock are arranged on a lower portion of the head pipe 2. A front wheel 8 is mounted rotatably to lower ends of the pair of front forks 7.

A seat 9 is arranged above the rear portion of the main frame 3. A fuel tank 10 made of a resin and provided with an oil filler port 10a is arranged below the seat 9. A pivot shaft 3a is provided at a rear end (lower portion) of the main frame 3. A front end of a rear arm 11 is supported by the pivot shaft 3a to be able to swing vertically. A rear wheel 12 is mounted rotatably to a rear end of the rear arm 11. A rear fender 13 is arranged above the rear wheel 12 to cover an upper portion of the rear wheel 12.

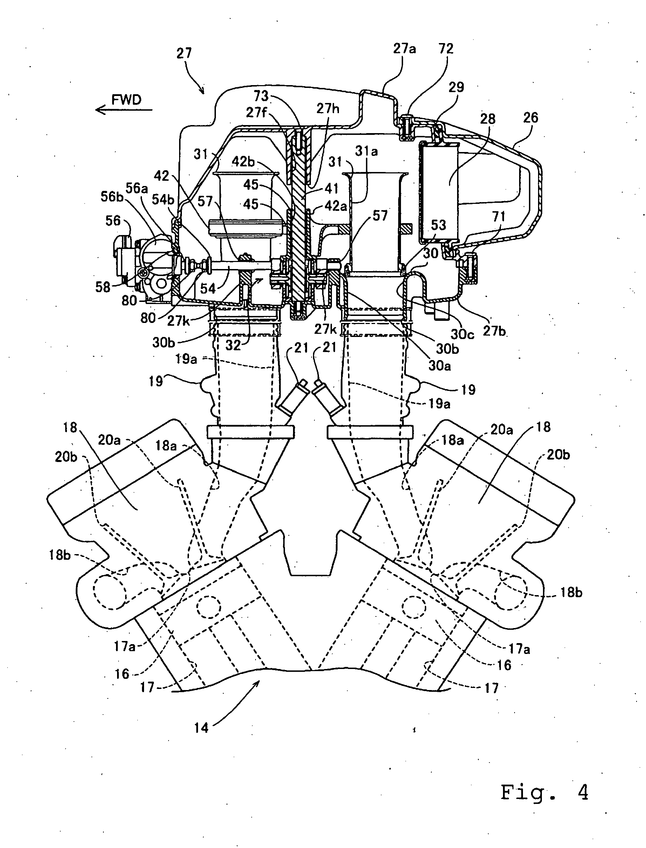

An engine 14 is arranged below the main frame 3. The engine 14 is fixed to the main frame 3 by a fixation member 15 and screw members 70. The engine 14 comprises, as shown in Fig. 4, pistons 16, cylinders 17, cylinder heads 18, and throttle bodies 19. While two cylinders 17 are shown in Fig. 4, the engine 14 according to the embodiment actually includes four cylinders. That is, the embodiment comprises a V-type four-cylinder engine, in which two front cylinders 17 (cylinder heads 18) and two rear cylinders 17 (cylinder heads 18) are arranged to provide a V-shaped space above the engine 14. The pistons 16 are arranged in the cylinders 17 and the cylinder heads 18 are arranged in a manner to close one openings of the cylinders 17. The cylinder head 18 is formed with an intake port 18a and an exhaust port 18b. The intake port 18a is provided to permit a mixture, which contains air and a fuel, to be supplied to a combustion chamber 17a of the cylinder 17. The exhaust port 18b is provided to permit residual gases after combustion to be discharged from the combustion chamber 17a of the cylinder 17. An intake valve 20a and an exhaust valve 20b, respectively, are arranged in the intake port 18a and the exhaust port 18b. The throttle body 19 is mounted to an opening of the intake port 18a and an air passage 19a inside the throttle body 19 is formed to be substantially straight. An injector 21 is mounted to the throttle body 19 to jet a fuel into the intake port 18a. An exhaust pipe 22 (see Fig. 1) is mounted to an opening of the exhaust port 18b and a silencer, or muffler 24 (see Fig. 1) is connected to the exhaust pipe 22 through a chamber 23 (see Fig. 1).

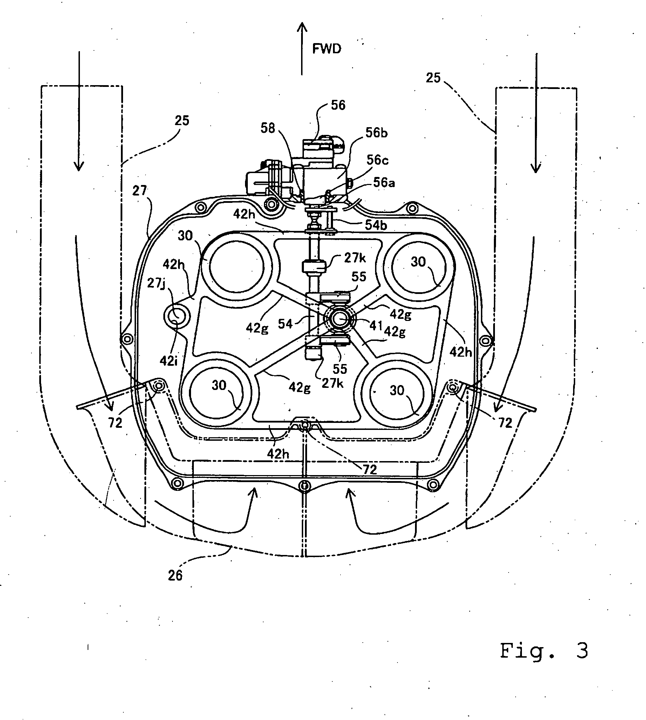

Intake ducts 25 are provided above the engine 14 (see Fig. 1) and on both left and right sides of the motorcycle 1 as shown in Figs. 1 and 3. The intake ducts 25 are structured so as to cover left and right portions of a duct section 26 (see Fig. 3). As shown in Figs. 3 and 4, a cleaner box 27 is arranged between the both left and right intake ducts 25 to be supplied with air from the intake ducts 25. That is, the intake ducts 25 are provided on the both left and right sides of the cleaner box 27 in a travel direction (direction of an arrow FWD) and structured to permit air to flow into the duct section 26.

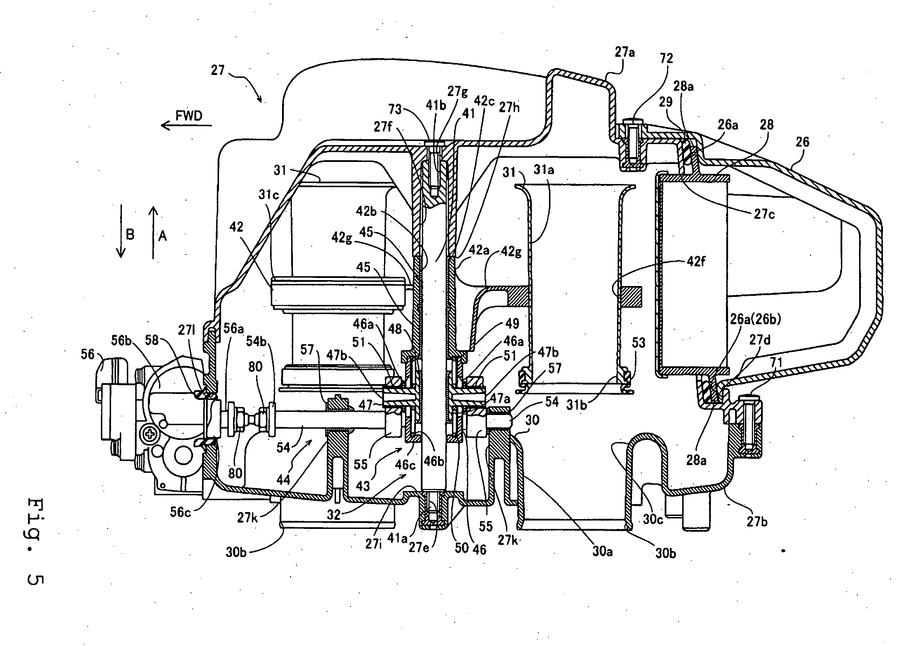

The cleaner box 27 is arranged above the V-shaped space of the engine 14 as shown in Fig. 4. The cleaner box 27 is an example of a "case section". The cleaner box 27 is constructed to include an upper cleaner box 27a and a lower cleaner box 27b as shown in Fig. 5. The upper cleaner box 27a and the lower cleaner box 27b are fixed by means of a plurality of screw members 71 as shown in Fig. 4.

According to the embodiment, an air filter section 28 for purification of air supplied from the intake ducts 25 (see Fig. 3) is arranged on an opening 27c provided on a rear side of the upper cleaner box 27a in the travel direction (direction of the arrow FWD) to cover the opening 27c. A packing 29 made of sponge is provided between a periphery of the opening 27c of the upper cleaner box 27a and a flange portion 28a of the air filter section 28. The packing 29 functions to inhibit air from entering and outgoing from a gap between the upper cleaner box 27a and the flange portion 28a of the air filter section 28. A duct section 26 is arranged rearwardly of the upper cleaner box 27a and the air filter section 28 to cover rear portions of the upper cleaner box 27a and the air filter section 28. Specifically, a holding portion 26a of the duct section 26 is arranged to interpose the packing 29 and the flange portion 28a of the air filter section 28 between it and the upper cleaner box 27a. A lower portion 26b of the holding portion 26a of the duct section 26 together with the packing 29 and the flange portion 28a of the air filter section 28 is engaged by an engagement 26d provided on a rear and lower portion of the upper cleaner box 27a. An upper portion of the duct section 26 is fixed to the upper cleaner box 27a by a screw member 72.

According to the embodiment shown in Fig. 3, the duct section 26 is structured to cause air supplied from the intake ducts 25, etc. to inflow in the travel direction (direction of the arrow FWD) and to cause the inflowed air to be led to a rear portion of the cleaner box 27, in which the air filter section 28 is arranged. That is, the duct section 26 functions to cause air supplied from the intake ducts 25, etc. to flow into the cleaner box 27 through the air filter section 28 from rearward in the travel direction.

As shown in Figs. 2 and 5, provided in the cleaner box 27 are stationary intake ducts 30, moving intake ducts 31, and an intake duct moving mechanism 32 (see Fig. 5). The stationary intake ducts 30 and the moving intake ducts 31 are provided one by one every cylinder 17 (see Fig. 4) of the engine 14. The stationary intake ducts 30 are provided integral with the lower cleaner box 27b of the cleaner box 27 as shown in Fig. 5 and air passages 30a inside the stationary intake ducts 30 are formed to be substantially straight. The stationary intake ducts 30 function to lead air purified in the cleaner box 27 to the intake ports 18a (see Fig. 4).

According to the embodiment, the moving intake ducts 31 are arranged on an intake side of the stationary intake ducts 30 and air passages 31a inside the moving intake ducts 31 are formed to be substantially straight (aligned). The moving intake ducts 31 together with the stationary intake ducts 30 function to lead air purified in the cleaner box 27 to the intake ports 18a. As shown in Fig. 4, lower throttle body connections 30b of the stationary intake ducts 30 positioned outside the cleaner box 27 are connected to upper portions of the throttle bodies 19. The throttle body connections 30b are structured to connect the stationary intake ducts 30 and the throttle bodies 19 in a substantially straight line. That is, according to the embodiment, the air passages 31a of the moving intake ducts 31, the air passages 30a of the stationary intake ducts 30, and the air passages 19a of the throttle bodies 19 are formed and connected to be substantially straight (aligned).

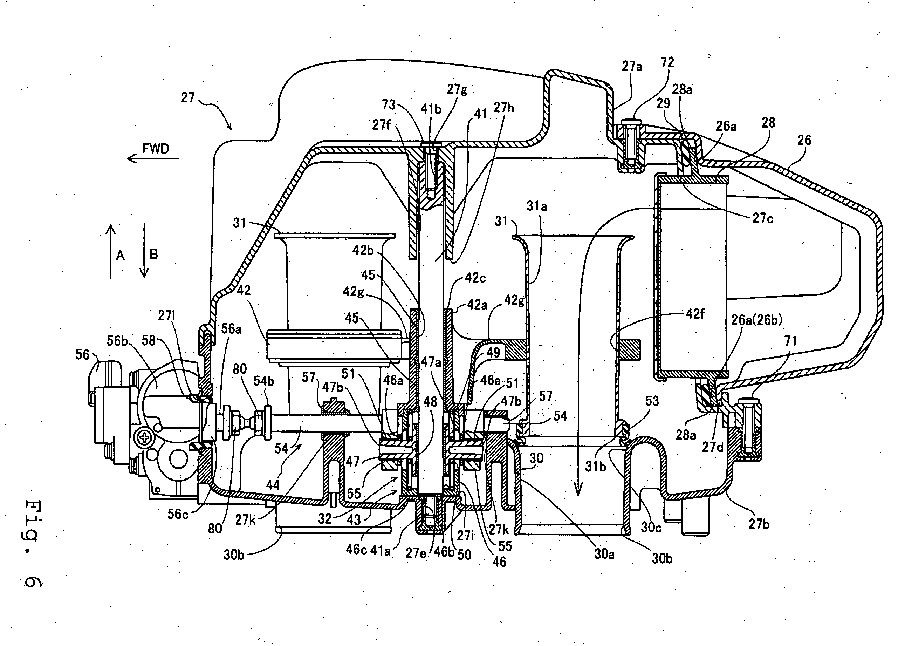

According to the embodiment, as shown in Figs. 5 and 6, the moving intake ducts 31 are structured to be movable between separated positions (a state in Fig. 5), in which openings 31b toward the stationary intake ducts 30 are separated from openings 30c of the stationary intake ducts 30 on an intake side, and abutment positions (a state in Fig. 6), in which the openings 31b of the moving intake ducts 31 abut against the openings 30c of the stationary intake ducts 30. Here, as shown in Figs. 4 to 6, in the case where the moving intake ducts 31 are moved to the separated positions (a state in Fig. 5), intake pipes connected to the cylinders 17 from the cleaner box 27 are constituted by the stationary intake ducts 30, the throttle bodies 19, and the intake ports 18a. On the other hand, in the case where the moving intake ducts 31 are moved to the abutment positions (a state in Fig. 6), intake pipes connected to the cylinders 17 from the cleaner box 27 are constituted by the moving intake ducts 31, the stationary intake ducts 30, the throttle bodies 19, and the intake ports 18a. The intake duct moving mechanism 32 functions to move the moving intake ducts 31 straight (linearly) between the separated positions and the abutment positions. The separated positions and the abutment positions, respectively, are examples of a "first position" and a "second position".

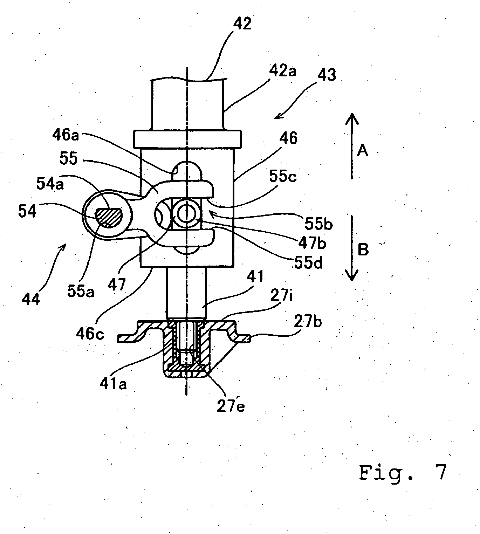

According to the embodiment, as shown in Fig. 5, the intake duct moving mechanism 32 includes a metallic spindle 41 extending straight, an intake duct holding section 42 made of a resin to hold the moving intake ducts 31, a moving member 43, and a turning member 44 (see Fig. 7).

According to the embodiment, the metallic spindle 41 is formed straight in a direction (an arrow direction A and an arrow direction B), in which the air passages 30a, 31a, through which air from the stationary intake ducts 30 and the moving intake ducts 31 passes, extend. The arrow direction A and the arrow direction B are examples of a "predetermined direction". A male thread portion 41a is provided on one end side (lower side) of the spindle 41 and a female thread portion 41b is provided on the other end side (upper side). The male thread portion 41a of the spindle 41 is screwed into a threaded portion 27e provided on an inner bottom surface of the lower cleaner box 27b. The other end side (upper side) of the spindle 41 is inserted into a shaft inserted portion 27f provided on an inner, upper surface of the upper cleaner box 27a to project inside the cleaner box 27 in a cylindrical manner. A screw inserted hole portion 27g is provided on an upper portion of the shaft inserted portion 27f of the upper cleaner box 27a to correspond to the female thread portion 41b of the spindle 41. A screw member 73 is inserted into the screw inserted hole portion 27g from outside the upper cleaner box 27a. The screw member 73 is screwed into the female thread portion 41b of the spindle 41 inserted into the shaft inserted portion 27f.

According to the embodiment, the intake duct holding section 42 is structured to move along the spindle 41 in a direction (the arrow direction A and the arrow direction B), in which the spindle 41 extends. A main insertion hole 42b is provided on an inner surface of a cylindrical portion 42a of the intake duct holding section 42. A bush 45 is fitted into the main insertion hole 42b. The spindle 41 is inserted into the bush 45 and an inner peripheral surface of the bush 45 contacts slidably with an outer peripheral surface of the spindle 41. That is, an inner peripheral surface of the bush 45 on the main insertion hole 42b slides on the outer peripheral surface of the spindle 41 extending straight whereby the main insertion hole 42b of the intake duct holding portion 42 and the spindle 41 function to move the moving intake ducts 31 held by the intake duct holding portion 42 straight (linearly) between separated positions and abutment positions. An upper abutment 42c is provided at an upper end of the cylindrical portion 42a of the intake duct holding section 42 to be able to abut against an upper stopper portion 27h provided on the shaft inserted portion 27f of the upper cleaner box 27a. The upper stopper portion 27h functions to stop the intake duct holding section 42 in a position of a predetermined level so that when the openings 31b of the moving intake ducts 31 toward the stationary intake ducts 30 are moved to the separated positions to separate from the openings 30c of the stationary intake ducts 30 on the intake side (upstream side), the upper abutment 42c of the intake duct holding section 42 abuts against the upper stopper portion 27h whereby the moving intake ducts 31 are stopped in the separated positions.

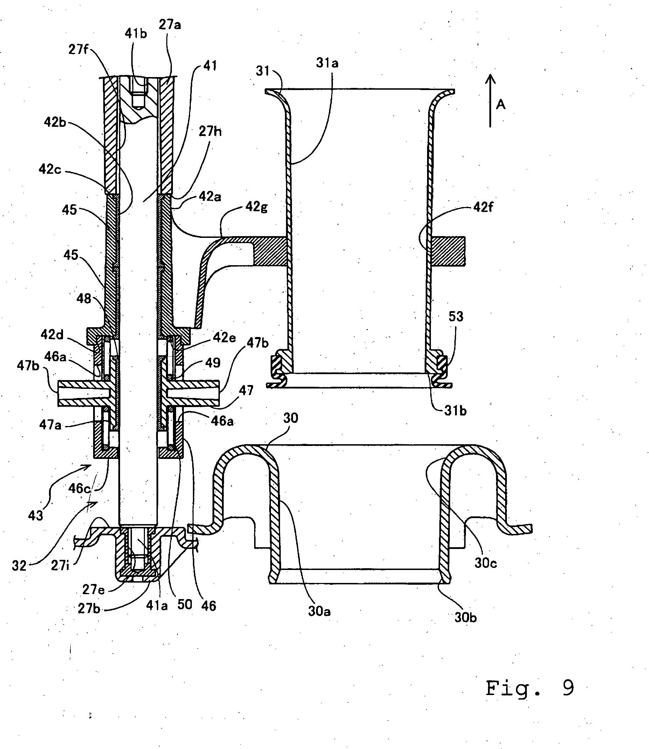

According to the embodiment, as shown in Figs. 5 and 7, the moving member 43 is mounted to a lower end 42d (see Fig. 9) of the cylindrical portion 42a of the intake duct holding section 42. The moving member 43 is structured to move along the spindle 41 in the direction (the arrow direction A and the arrow direction B), in which the spindle 41 extends, together with the intake duct holding section 42. Specifically, as shown in Fig. 5, the moving member 43 includes a cylindrical-shaped part receiving portion 46 made of a resin and mounted to the lower end 42d of the cylindrical portion 42a of the intake duct holding section 42, a slide member 47 made of a resin, a bush 48, an upper spring member 49 composed of a compression spring, and a lower spring member 50 composed of a compression spring like the upper spring member 49. A slide member 47 received in the part receiving portion 46 is formed so that two cylindrical-shaped projections 47b project from a side of a cylindrical-shaped body portion 47a in a manner to be positioned on mutually opposite sides and to be made substantially perpendicular to the side of the body portion 47a. Bushes 51, respectively, are fitted onto outer peripheral surfaces of the projections 47b. Slots 46a (see Fig. 7) having a predetermined length substantially in parallel to a direction (the arrow direction A and the arrow direction B) (see Fig. 7), in which the slide member 47 moves relative to the spindle 41, are provided on those regions of the part receiving portion 46, which correspond to the two projections 47b projecting from the side of the body portion 47a of the slide member 47.

That is, the slots 46a of the part receiving portion 46 are formed to permit the two projections 47b of the slide member 47 to project outside the part receiving portion 46 from the slots 46a and to enable the projections 47b to move when the slide member 47 moves on the spindle 41. The bush 48 is fitted onto an inner peripheral surface of the body portion 47a of the slide member 47 and an inner peripheral surface of the bush 48 is fitted slidably onto the outer peripheral surface of the spindle 41. The lower spring member 50 is fitted onto a portion of the body portion 47a of the slide member 47 below the projections 47b. An upper side of the lower spring member 50 abuts against the projections 47b of the slide member 47 and a lower side of the lower spring member 50 abuts against a spring bearing portion 46b of the part receiving portion 46. The upper spring member 49 is fitted onto a portion of the body portion 47a of the slide member 47 above the projections 47b. A lower side of the upper spring member 49 abuts against the projections 47b of the slide member 47 and an upper side of the lower spring member 50 abuts against a lower surface 42e (see Fig. 9) of the cylindrical portion 42a, to which the part receiving portion 46 is mounted.

A lower abutment 46c capable of abutting against a lower stopper portion 27i provided close to the threaded portion 27e of the lower cleaner box 27b is provided at a lower end of the part receiving portion 46 of the moving member 43 as shown in Figs. 6 and 7. A distance, over which the lower abutment 46c travels to abut against the lower stopper portion 27i, is set to be a little larger than a distance, over which the openings 31b of the moving intake ducts 31 toward the stationary intake ducts 30 travel to abut against the openings 30c of the stationary intake ducts 30 on the intake side (upstream side). That is, the openings 31b of the moving intake ducts 31 toward the stationary intake ducts 30 abut against the openings 30c of the stationary intake ducts 30 on the intake side (upstream side) before the lower abutment 46c abuts against the lower stopper portion 27i. The lower stopper portion 27i functions to inhibit the moving intake ducts 31 from moving toward the stationary intake ducts 30 by virtue of the lower abutment 46c of the part receiving portion 4 6 of the moving member 43 abutting against the lower stopper portion 27i after the openings 31b of the moving intake ducts 31 toward the stationary intake ducts 30 move to the abutment positions, in which they abut against the openings 30c of the stationary intake ducts 30 on the intake side (upstream side).

First connection arm portions 42g for connection of the cylindrical portion 42a and intake duct mount portions 42f, to which the moving intake ducts 31 (see Fig. 2) are mounted, are formed in a rod-shaped manner on the cylindrical portion 42a surrounding the main insertion hole 42b. Second connection arm portions 42h for connection of respective adjacent intake duct mount portions 42f (moving intake ducts 31) are formed in a rod-shaped manner between respective adjacent intake duct mount portions 42f. The second connection arm portions 42h function to compensate for stiffness of the first connection arm portions 42g for connection of the cylindrical portion 42a and the respective intake duct mount portions 42f.

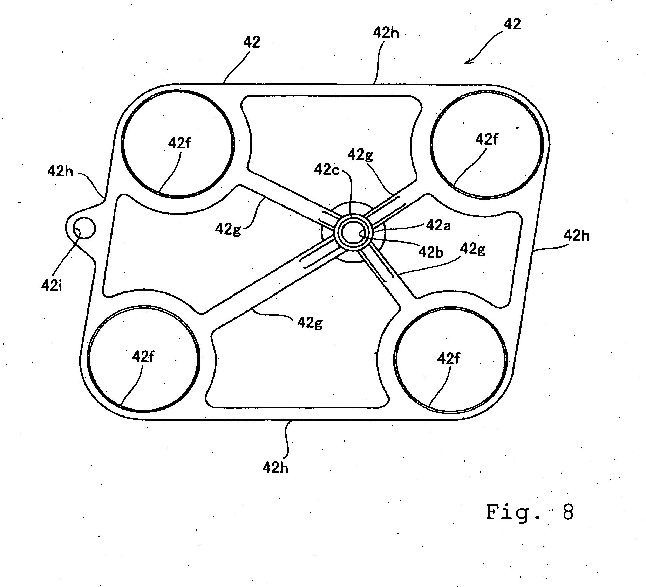

As shown in Figs. 3 and 8, the second connection arm portion 42h most distant from the spindle 41 (the main insertion hole 42b) is provided with a sub-insertion hole 42i. As shown in Fig. 2, a sub-spindle 27j extending substantially in parallel to the spindle 41 is inserted slidably into the sub-insertion hole 42i. The sub-spindle 27j is provided integrally on an underside of the lower cleaner box 27b. The sub-insertion hole 42i and the sub-spindle 27j function to inhibit the intake duct holding section 42 and the moving intake ducts 31 from turning about the spindle 41 when the intake duct holding section 42 moves.

The intake duct mount portions 42f are formed to be circumferential in shape as shown in Fig. 8. The moving intake ducts 31 are mounted to the intake duct mount portions 42f as shown in Fig. 5.

As shown in Figs. 5 and 6, rubber lips 53 are mounted to ends of the moving intake ducts 31 toward the stationary intake ducts 30. The rubber lips 53 function to fill gaps between the moving intake ducts 31 and the stationary intake ducts 30 in the case where the openings 31b of the moving intake ducts 31 toward the stationary intake ducts 30 move to the abutment positions, in which they abut against the openings 30c of the stationary intake ducts 30 on the intake side (upstream side).

According to the embodiment shown in Figs. 5 and 7, a direction, in which the turning member 44 is arranged, intersects (is perpendicular to) a predetermined direction (the arrow direction A and the arrow direction B) being a direction, in which the moving intake ducts 31 move. The turning member 44 functions to support the moving member 43 movably in a direction (the arrow direction A and the arrow direction B), in which the spindle 41 extends. The turning member 44 includes a metallic turning shaft 54 in the form of a round rod and two lever members 55 (see Fig. 7) made of a resin. Specifically, the turning shaft 54 in the form of a round rod and the two lever members 55 are formed integrally. That is, respective turning-shaft insertion holes 55a (see Fig. 7) of the two lever members 55 are mounted to the turning shaft 54 by means of insert molding. Flat portions 54a, respectively, are provided on those portions of the turning shaft 54, to which the respective turning-shaft insertion holes 55a of the two lever members 55 are mounted, as shown in Fig. 7. The flat portions 54a function to inhibit the lever members 55 from idling relative to the turning shaft 54 when the turning shaft 54 turns.

As shown in Fig. 5, a connection 54b being connected to a drive shaft 56a of a motor 56 described later is provided at one end (front end) of the turning shaft 54. A nut 80 is inserted into a threaded portion (not shown) provided on the drive shaft 56a and a nut 80 is inserted into a threaded portion (not shown) provided at one end of the turning shaft 54 whereby the connection 54b is fixed to one ends of the drive shaft 56a and the turning shaft 54, respectively. Thereby, the turning shaft 54 of the turning member 44 is connected coaxially to the drive shaft 56a, so that the turning shaft 54 of the turning member 44 can be rotated as the drive shaft 56a rotates. Shaft supports 27k, respectively, are provided in the vicinity of a substantially intermediate portion between the connection 54b and the flat portions 54a and the other end of the turning shaft 54 in a manner to project upward in an interior of the cleaner box 27 from an underside of the lower cleaner box 27b. The turning shaft 54 is supported rotatably by bearings 57 fitted into the shaft supports 27k.

As shown in Fig. 7, the two lever members 55 of the turning member 44, respectively, engage with the two projections 47b of the slide member 47 of the moving member 43. Specifically, an engagement support 55b of the lever member 55 engages slidably with the projection 47b and slide surfaces 55c, 55d are provided on the engagement support 55b to support the projection 47b slidably. The slide surfaces 55c, 55d are provided in the form of a flat surface to face each other. That is, as shown in Figs. 9 to 16, in the case where the turning member 44 turns to swing the lever members 55, the projections 47b of the slide member 47, respectively, supported by the slide surfaces 55c, 55d are made slidable on the slide surfaces 55c, 55d. Thereby, the turning member 44 can move the main insertion hole 42b of the intake duct holding portion 42 straight along the spindle 41.

Here, according to the embodiment, the motor 56 for driving of the turning member 44 is arranged in a direction intersecting (perpendicular to) a direction (the arrow direction A and the arrow direction B), in which the moving intake ducts 31 move. Specifically, the motor 56 is arranged with a body portion 56b of the motor 56 outside a front portion of the lower cleaner box 27b of the cleaner box 27 as shown in Fig. 5. That is, according to the embodiment, the motor 56 is arranged on an opposite side to a side of the cleaner box 27, on which the air filter section 28 is arranged. The motor 56 is an example of "drive source" in the invention.

According to the embodiment, the drive shaft 56a is arranged to extend in a direction intersecting (perpendicular to) a direction (the arrow direction A and the arrow direction B), in which the moving intake ducts 31 move. The drive shaft 56a is arranged inside the cleaner box 27. An engagement projection 56c having a drive shaft 56a is provided on the motor 56 to be made integral with the body portion 56b and fitted through a rubber sealing member 58 into a hole 271 of a front portion of the lower cleaner box 27b. That is, the drive shaft 56a is inserted into the hole 271. The sealing member 58 functions to fill a gap between the hole 271 of the cleaner box 27 and the engagement projection 56c of the motor 56.

The motor 56 turns the drive shaft 56a in a predetermined angular range in one direction or in the other direction. Specifically, the motor 56 functions to inhibit the drive shaft 56a from turning in one direction when the drive shaft 56a turns a predetermined angle in one direction and functions to inhibit the drive shaft 56a from turning in the other direction when the drive shaft 56a turns a predetermined angle in the other direction.

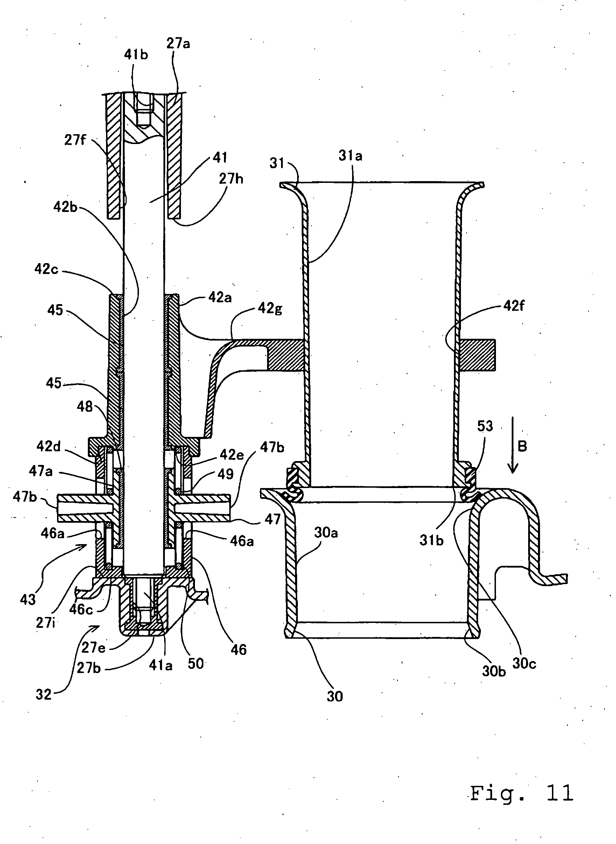

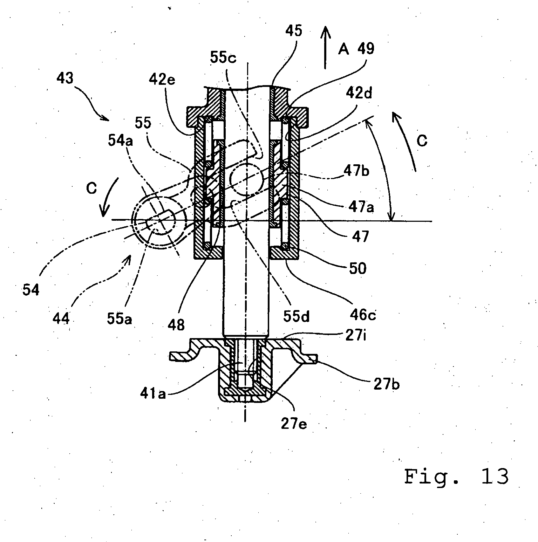

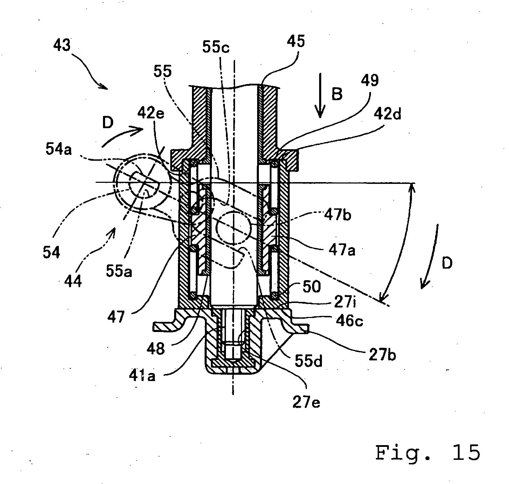

By constructing the moving member 43 and the turning member 44 of the intake duct moving mechanism 32 and the motor 56 in the manner described above, the moving intake ducts 31 are moved in a direction away from the stationary intake ducts 30 as shown in Figs. 9 and 13 in the case where the drive shaft 56a (see Fig. 5) of the motor 56 is turned in an arrow direction C (see Fig. 13) and the turning member 44 is turned in the arrow direction C (see Fig. 13). As shown in Figs. 11 and 15, the moving intake ducts 31 are moved in a direction toward the stationary intake ducts 30 in the case where the drive shaft 56a of the motor 56 is turned in an arrow direction D (see Fig. 15) and the turning member 44 is turned in the arrow direction D (see Fig. 15).

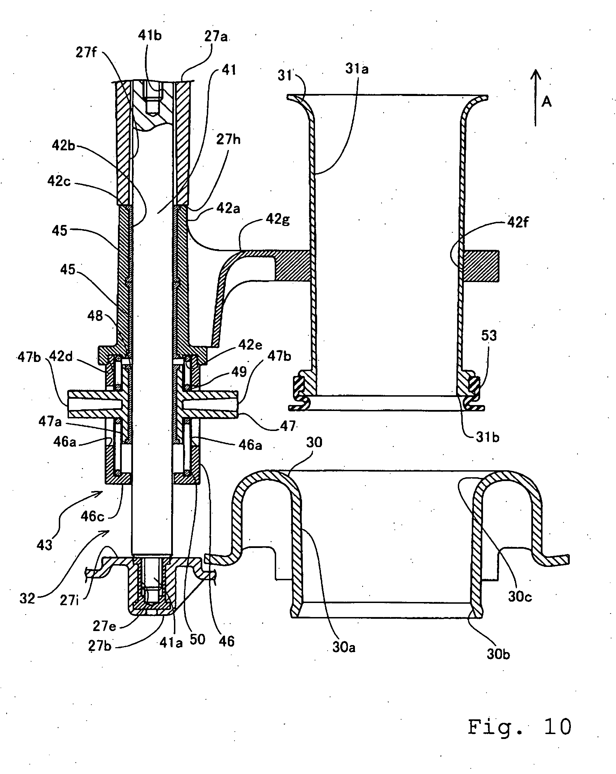

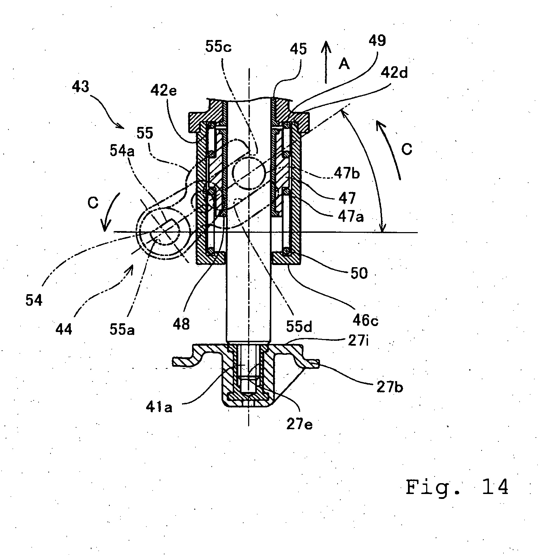

The upper abutment 42c of the intake duct holding section 42 abuts against the upper stopper portion 27h of the upper cleaner box 27a as shown in Figs. 9, 10, 13, and 14 in the case where the moving intake ducts 31 reach the separated positions. The moving member 43 is structured so that the slide member 47 is moved in the arrow direction A (see Figs. 13 and 14) and the projections 47b push the upper spring member 49 in the arrow direction A (see Figs. 13 and 14). Therefore, when the upper abutment 42c abuts against the upper stopper portion 27h as shown in Figs. 10 and 14, the upper spring member 49 is compressed and the drive shaft 56a is further turned to a predetermined angle in the case where the drive shaft 56a of the motor 56 is not turned to a predetermined angle due to an error in assembling the moving member 43 and the turning member 44 to the motor 56.

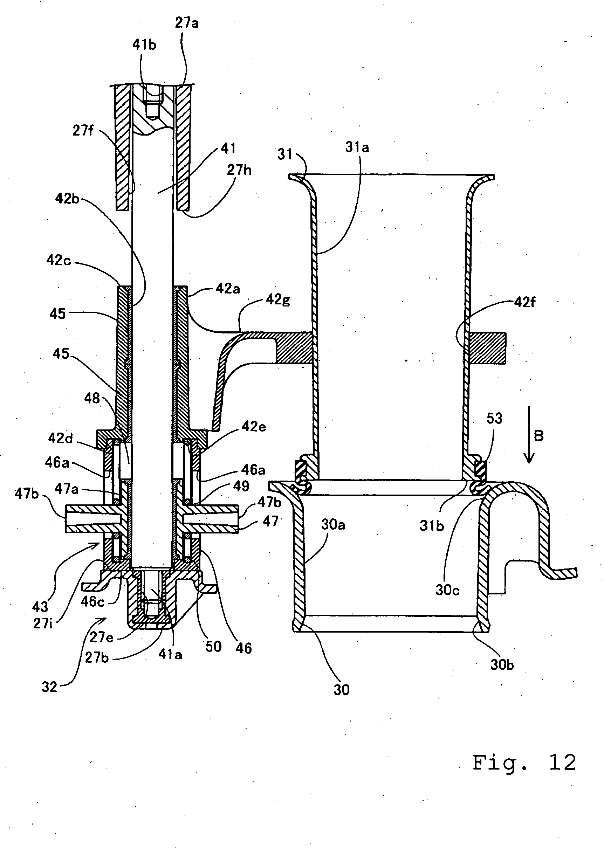

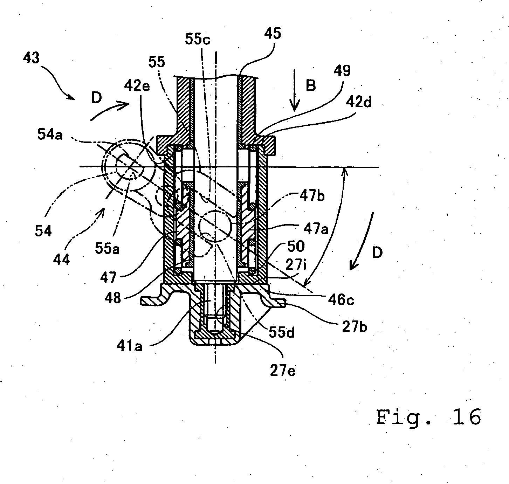

On the other hand, the lower abutment 46c of the part receiving portion 46 of the moving member 43 abuts against the lower stopper portion 27i of the lower cleaner box 27b as shown in Figs. 11, 12, 15, and 16 after the moving intake ducts 31 reach the abutment positions. The moving member 43 is structured so that the slide member 47 is moved in the arrow direction B (see Figs. 15 and 16) and the projections 47b push the lower spring member 50 in the arrow direction B (see Figs. 15 and 16). Therefore, when the moving intake ducts 31 reach the abutment positions as shown in Figs. 12 and 16, the lower spring member 50 is compressed and the drive shaft 56a is further turned to a predetermined angle in the case where the drive shaft 56a of the motor 56 is not turned to a predetermined angle due to an error in assembling the moving member 43 and the turning member 44 to the motor 56.

Subsequently, an operation when intake pipes connected to the cylinders 17 from the cleaner box 27 are switched in length will be described with reference to Figs. 4 to 6 and 9 to 16.

In the case where the engine 14 (see Fig. 4) rotates at high speed, intake pipes are shortened in order to easily get a pulsation effect. That is, in the case where the engine 14 rotates at high speed, the moving intake ducts 31 are moved to the separated positions.

Specifically, as first shown in Fig. 5, the motor 56 turns the turning member 44 of the intake duct moving mechanism 32 in the arrow direction C (see Fig. 13) whereby the slide member 47 is moved along the spindle 41 in the arrow direction A (see Fig. 13). Thereby, as shown in Figs. 9 and 13, bias in the arrow direction A is generated on the upper spring member 49 whereby the moving member 43 is moved in the arrow direction A, so that the intake duct holding section 42 is moved straight in the arrow direction A (along the spindle 41). As shown in Fig. 9, the upper abutment 42c of the intake duct holding section 42 abuts against the upper stopper portion 27h whereby the moving intake ducts 31 are moved to the separated positions. As shown in Fig. 10, the turning member 44 is further turned in the arrow direction C (see Fig. 14) whereby the upper spring member 49 is compressed and the projections 47b of the slide member 47 of the moving member 43 are pushed up the slide surfaces 55d of the lever members 55. The drive shaft 56a of the motor 56 is turned to a predetermined angle in the arrow direction C (see Fig. 14).

Thereby, the moving intake ducts 31 are moved to the separated positions in a state, in which the openings 31b of the moving intake ducts 31 are held in parallel to the openings 30c of the stationary intake ducts 30. Consequently, in the case where the engine 14 (see Fig. 4) rotates at high speed, intake pipes are shortened since they are constituted by the stationary intake ducts 30, the throttle bodies 19 (see Fig. 4), and the intake ports 18a (see Fig. 4). Here, in the case where the intake pipes are shortened when the engine 14 rotates at high speed, an improvement in intake efficiency is achieved since pressure wave of high pressure is liable to reach openings of the intake ports 18a toward the cylinders 17 (see Fig. 4) when the intake valves 20a (see Fig. 4) are opened.

Subsequently, in the case where the engine 14 (see Fig. 4) rotates at low speed, the intake pipes are lengthened in order to easily get a pulsation effect. That is, in the case where the engine 14 rotates at low speed, the moving intake ducts 31 are moved to the abutment positions.

Specifically, as first shown in Fig. 6, the motor 56 turns the turning member 44 of the intake duct moving mechanism 32 in the arrow direction D (see Fig. 15) whereby the slide member 47 is moved along the spindle 41 in the arrow direction B (see Fig. 15). Thereby, as shown in Figs. 11 and 15, bias in the arrow direction B is generated on the upper spring member 49 whereby the moving member 43 is moved in the arrow direction B, so that the intake duct holding section 42 is moved straight in the arrow direction B (along the spindle 41). As shown in Fig. 11, the openings 31b of the moving intake ducts 31 abut against the openings 30c of the stationary intake ducts 30 whereby the moving intake ducts 31 are moved to the abutment positions. As shown in Fig. 12, the turning member 44 is further turned in the arrow direction D (see Fig. 16) whereby the lower spring member 50 is compressed and the projections 47b of the slide member 47 of the moving member 43 are pushed down by the slide surfaces 55c of the lever members 55. The drive shaft 56a of the motor 56 is turned to a predetermined angle in the arrow direction D (see Fig. 16).

Thereby, the moving intake ducts 31 are moved to the abutment positions in a state, in which the openings 31b of the moving intake ducts 31 are held in parallel to the openings 30c of the stationary intake ducts 30. Consequently, in the case where the engine 14 (see Fig. 4) rotates at high speed, intake pipes are lengthened since they are constituted by the moving intake ducts 31, the stationary intake ducts 30, the throttle bodies 19 (see Fig. 4), and the intake ports 18a (see Fig. 4) . Here, in the case where the intake pipes are lengthened when the engine 14 rotates at low speed, an improvement in intake efficiency is achieved since pressure wave of high pressure is liable to reach openings of the intake ports 18a toward the cylinders 17 (see Fig. 4) when the intake valves 20a (see Fig. 4) are opened.

According to the embodiment, as described above, the moving intake ducts 31 are structured to move in a straight line between separated positions, in which the openings 31b of the moving intake ducts 31 toward the stationary intake ducts 30 are separated from the openings 30c of the stationary intake ducts 30 on the intake side, and abutment positions, in which the openings 31b of the moving intake ducts 31 toward the stationary intake ducts 30 abut against the openings 30c of the stationary intake ducts 30 on the intake side, whereby flow of air passing through the moving intake ducts 31 and drawn by the stationary intake ducts 30 can be made straight linear even when the openings 31b of the moving intake ducts 31 toward the stationary intake ducts 30 are separated from the openings 30c of the stationary intake ducts 30 on the intake side, so that it is possible to inhibit flow of air from being obstructed. Consequently, it is possible to inhibit a decrease in intake efficiency in the case where the moving intake ducts 31 are separated from the stationary intake ducts 30. A direction, in which the motor 56 and the turning member 44 are arranged, intersects a predetermined direction (the arrow direction A and the arrow direction B) being a direction, in which the moving intake ducts 31 move, whereby the motor 56 is not arranged on a straight line in the predetermined direction (the arrow direction A and the arrow direction B) being a direction, in which the moving intake ducts 31 move straight (linearly), so that it is possible to inhibit large-sizing in a direction (the arrow direction A and the arrow direction B), in which the moving intake ducts 31 move straight (linearly).

According to the embodiment, as described above, the motor 56 can be arranged in a position distant from the air filter section 28 by arranging the air filter section 28 on an opposite side to a side (a side in the direction of the arrow FWD) of the cleaner box 27, on which the motor 56 is arranged, it is possible to form a space, through which air passes, in a region surrounding the air filter section 28. Thereby, flow of air in the region surrounding the air filter section 28 can be inhibited from being obstructed, so that flow of air flowing into the cleaner box 27 from the air filter section 28 can be inhibited from being obstructed.

According to the embodiment, as described above, by arranging the motor 56, the cleaner box 27, and the air filter section 28 straight in a longitudinal direction of the motorcycle 1, it is possible to readily inhibit a vehicle width from becoming large in a direction perpendicular to a travel direction.

According to the embodiment, as described above, the moving member 43 moving along the spindle 41 in the direction (the arrow direction A and the arrow direction B), in which the spindle 41 extends, together with the intake duct holding section 42, is provided on the intake duct moving mechanism 32, and the lever members 55 supporting the moving member 43 movably in a direction (the arrow direction A and the arrow direction B), in which the spindle 41 extends, are provided on the turning member 44 driven by the motor 56, whereby rotational motion of the drive shaft 56a of the motor 56 can be converted by the turning member 44 and the spindle 41 driven by the motor 56 into linear motion, in which the moving member 43 is moved straight (linearly), so that it is possible to readily move the moving member 43 straight along the spindle 41. Thereby, as the moving member 43 is moved, the intake duct holding section 42 can readily be moved straight (linearly).

According to the embodiment, as described above, the air passages 31a of the moving intake ducts 31, through which air passes, the air passages 30a of the stationary intake ducts 30, through which air passes, and the air passages 19a of the throttle bodies 19, through which air passes, are formed and connected to be substantially straight (aligned), whereby flow of air passing to the intake ports 18a of the engine 14 from the moving intake ducts 31 and the stationary intake ducts 30 can be made straight, so that it is possible to further inhibit air from being increased in flow resistance. Thereby, it is possible to further inhibit a decrease in intake efficiency.

In addition, it should be understood that the embodiment disclosed herein is exemplary in all respects and not limitative. The scope of the invention is not indicated by the descriptions of the embodiment but the claims and includes all changes in the meaning equivalent to the claims and within a scope of the claims.

For example, while the embodiment shows a motorcycle as an example of a vehicle provided with an intake duct, the invention is not limited thereto but applicable to other vehicles such as automobile, three-wheeler, ATV (All Terrain Vehicle), etc.

While the embodiment shows an example, in which a motor is arranged in a travel direction of a motorcycle and an air filter section is arranged on an opposite side to the travel direction of the motorcycle, the invention is not limited thereto but a motor may be provided on an opposite side to a travel direction of a motorcycle and an air filter section may be arranged in the travel direction of the motorcycle.

While the embodiment shows application of the invention to a vehicle with a four-cylinder engine mounted thereon, the invention is not limited thereto but also applicable to vehicles such as vehicle with other multi-cylinder engines than a four-cylinder engine, and vehicle with a single-cylinder engine.

While the embodiment shows an example, in which an intake duct is provided to cover a duct section, the invention is not limited thereto but an intake duct may be provided to be connected to a duct section.

While the embodiment shows an example, in which a stationary intake duct is formed to be made integral with a lower cleaner box, the invention is not limited thereto but a stationary intake duct may be formed separately from a lower cleaner box (cleaner box).

While the embodiment shows an example, in which the moving intake ducts and the intake duct holding section comprise separate parts and the moving intake ducts are mounted to the intake duct holding section, the invention is not limited thereto but an intake duct holding section and a moving intake duct may be molded integrally.

While the embodiment shows an example, in which a drive shaft of a motor and a turning shaft of a turning member are fixed by a connection, the invention is not limited thereto but a drive shaft of a motor and a turning shaft of a turning member may be fixed by a coupling, or the like.

While the embodiment shows an example, in which a flat portion is provided in order to inhibit the lever member of the turning member from idling relative to the turning shaft, the invention is not limited thereto but a plurality of projections (portions subjected to knurling) may be provided on a turning shaft.

It is to be noted that "intake ducts" are sometimes referred to as "funnels". Accordingly, the terms "stationary intake ducts", "moving intake ducts", "intake duct moving mechanism", "intake duct holding section", "intake duct mount portion" etc, could be substituted herein by the terms "stationary funnel", "moving funnel", "intake funnel", "funnel holding section", "funnel mount portion", etc. Also, although the example intake ducts shown herein taper from an inlet side, it is to be note that the inventions is not limited to intake ducts (or funnels) having a particular shape, and in other embodiments the intake ducts, or funnels, could have a shape other than that of the described examples.

### DESCRIPTION OF NUMERALS AND SIGNS

14: engine
17: cylinder
18: cylinder head
18a: intake port
19: throttle body
19a: air passage
25: intake duct
26: duct section
27: cleaner box (case section)
271: hole
28: air filter section
30: stationary intake duct (stationary funnel)
30a: air passage
30c: opening
31: moving intake duct (moving funnel)
31a: air passage
31b: opening
32: intake duct moving mechanism (funnel moving mechanism)
41: spindle
42: intake duct holding section (funnel holding section)
43: moving member
44: turning member
55: lever member
56: motor (drive source)
56a: drive shaft
58: sealing member
A, B: predetermined direction

## Claims

1. A vehicle, comprising:
an engine (14) having an intake port (18a),
a stationary intake duct (30), through which air is led to the intake port (18a) of the engine (14),
a moving intake duct (31) arranged movably on an intake side of the stationary intake duct (30) and cooperating with the stationary intake duct (30) to lead the air to the intake port (18a) of the engine (14),
an intake duct moving mechanism (32) including a turning member (44) for movement of the moving intake duct (31), and
a drive source (56) for driving of the turning member (44) of the intake duct moving mechanism (32), and
wherein the moving intake duct (31) is moved straight in a predetermined direction (A, B) between a first position, in which an opening (31b) of the moving intake duct (31) toward the stationary intake duct (30) is separated from an opening (30c) of the stationary intake duct (30) on an intake side, and a second position, in which the opening (31b) of the moving intake duct (31) toward the stationary intake duct (30) abuts against the opening (30c) of the stationary intake duct (30) on the intake side,
wherein a direction, in which the drive source (56) and the turning member (44) are arranged, intersects the predetermined direction (A, B) in which the moving intake duct (31) is moved,
wherein a plurality of the stationary intake ducts (30) and a plurality of the moving intake ducts (31) are provided,
wherein the intake duct moving mechanism (32) includes an intake duct holding section (42) which holds the moving intake ducts (31), and
wherein the intake duct holding section (42) is moved straight in the predetermined direction (A, B) whereby the moving intake ducts (31) are moved straight between the first position and the second position,
**characterized in that**
the intake duct moving mechanism (32) further includes a spindle (41) extending straight in a direction in which the air passage, through which air from the stationary intake ducts (30) passes, extends,
the intake duct holding section (42) is moved along the spindle (41) in a direction, in which the spindle (41) extends,
the intake duct holding section (42) includes a cylindrical portion (42a) surrounding a main insertion hole (42b) receiving the spindle (41), intake duct mount portions (42f), to which the moving intake ducts (31) are mounted, and connection arm portions (42g), and
the connection arm portions (42g) are formed in a rod-shaped manner on the cylindrical portion (42a), for connection of the cylindrical portion (42a) and the intake duct mount portions (42f).

2. The vehicle according to claim 1, further comprising a case section (27), in which the stationary intake duct (30), the moving intake duct (31), and the intake duct moving mechanism (32) are arranged, and
an air filter section (28) for purification of the air flowing into the case section (27), and
wherein the air filter section (28) is arranged on an opposite side to a side of the case section (27), on which the drive source (56) is arranged.

3. The vehicle according to claim 2, wherein the drive source (56), the case section (27), and the air filter section (28) are arranged in a longitudinal direction of the vehicle.

4. The vehicle according to claim 3, further comprising a duct section (26) having air flowing into the case section (27) through the air filter section (28), and
wherein the air filter section (28) and the duct section (26) are arranged rearwardly of the case section (27) in a travel direction (FWD), and
the drive source (56) is arranged forwardly of the case section (27) in the travel direction (FWD).

5. The vehicle according to claim 4, further comprising intake ducts (25), through which air is let thereinto from outside the vehicle, and
the intake ducts (25) are provided laterally of the case section (27) in the travel direction (FWD) to have air flowing into the duct section (26).

6. The vehicle according to claim 5, wherein the intake ducts (25) are provided on both left and right sides of the case section (27) in the travel direction (FWD).

7. The vehicle according to claim 2, wherein the drive source (56) is arranged outside the case section (27).

8. The vehicle according to claim 7, wherein the drive source includes a drive shaft connected to the intake duct moving mechanism and
a hole (271), into which the drive shaft (56a) is inserted, is provided on a side of the case section (27), on which the drive source (56) is arranged.

9. The vehicle according to claim 8, further comprising a sealing member (58) provided between the drive shaft (56a) and the hole (271).

10. The vehicle according to any preceding claim, wherein the drive source includes a drive shaft connected to the turning member and
the drive shaft is arranged to extend in a direction intersecting the predetermined direction being a direction, in which the moving intake duct is moved.

11. The vehicle according to claim 10, wherein the turning member is connected coaxially to the drive shaft.

12. The vehicle according to one of claim 1 to 11, wherein the spindle (41) and the turning member (44) intersect each other as viewed from laterally of the vehicle.

13. The vehicle according to one of claims 1 to 11, wherein:
the intake duct moving mechanism (32) further includes a moving member (43) moving along the spindle (41) in a direction, in which the spindle (41) extends, together with the intake duct holding section (42), and
the turning member (44) driven by the drive source (56) includes a lever member (55) supporting the moving member (43) movably in the direction, in which the spindle (41) extends.

14. The vehicle according to any preceding claim, wherein
a throttle body (19) is arranged between an intake port (18a) of the engine (14) and an opening (31b) of the stationary intake duct (30) toward the engine (14), and
an air passage (31a) of the moving intake duct (31) through which the air passes, an air passage (30a) of the stationary intake duct (30) through which an air passes, and an air passage (19a) of the throttle body (19) through which the air passes are formed and connected in a substantially straight arrangement.

## Patentansprüche

1. Ein Fahrzeug, das folgende Merkmale aufweist:
einen Motor (14) mit einer Einlassöffnung (18a),
einen stationären Einlasskanal (30), durch den Luft zu der Einlassöffnung (18a) des Motors (14) geleitet wird,
einen beweglichen Einlasskanal (31), der beweglich an einer Einlassseite des stationären Einlasskanals (30) angeordnet ist, und mit dem stationären Einlasskanal (30) zusammenwirkt, um die Luft zu der Einlassöffnung (18a) des Motors (14) zu führen,
einen Einlasskanalbewegungsmechanismus (32), der ein Drehbauglied (44) für eine Bewegung des beweglichen Einlasskanals (31) umfasst, und
eine Antriebsquelle (56) zum Antreiben des Drehbauglieds (44) des Einlasskanalbewegungsmechanismus (32), und
wobei der bewegliche Einlasskanal (31) in einer vorbestimmten Richtung (A, B) gerade bewegt wird zwischen einer ersten Position, in der eine Öffnung (31 b) des beweglichen Einlasskanals (31) zu dem stationären Einlasskanal (30) hin von einer Öffnung (30c) des stationären Einlasskanals (30) auf einer Einlassseite getrennt ist, und einer zweiten Position, in der die Öffnung (31 b) des beweglichen Einlasskanals (31) zu dem stationären Einlasskanal (30) hin gegen die Öffnung (30c) des stationären Einlasskanals (30) auf der Einlassseite anstößt,
wobei eine Richtung, in der die Antriebsquelle (56) und das Drehbauglied (44) angeordnet sind, die vorbestimmte Richtung (A, B) schneidet, in der der bewegliche Einlasskanal (31) bewegt wird,
wobei eine Mehrzahl der stationären Einlasskanäle (30) und eine Mehrzahl der beweglichen Einlasskanäle (31) vorgesehen sind,
wobei der Einlasskanalbewegungsmechanismus (32) einen Einlasskanalhalteabschnitt (42) umfasst, der die beweglichen Einlasskanäle (31) hält, und
wobei der Einlasskanalhalteabschnitt (42) in der vorbestimmten Richtung (A, B) gerade bewegt wird, wobei die beweglichen Einlasskanäle (31) gerade bewegt werden zwischen der ersten Position und der zweiten Position,
**dadurch gekennzeichnet, dass**
der Einlasskanalbewegungsmechanismus (32) ferner eine Spindel (41) umfasst, die sich gerade erstreckt in einer Richtung, in der sich der Luftdurchlass, durch den Luft von den stationären Einlasskanälen (30) verläuft, erstreckt,
der Einlasskanalhalteabschnitt (42) entlang der Spindel (41) in einer Richtung bewegt wird, in der sich die Spindel (41) erstreckt,
der Einlasskanalhalteabschnitt (42) einen zylindrischen Abschnitt (42a), der ein Haupteinfügungsloch (42b) umgibt, das die Spindel (41) aufnimmt, Einlasskanalbefestigungsabschnitte (42f), an denen die beweglichen Einlasskanäle (31) befestigt sind, und Verbindungsarmabschnitte (42g) umfasst, und
die Verbindungsarmabschnitte (42g) in einer stabförmigen Weise auf dem zylindrischen Abschnitt (42a) gebildet sind, für eine Verbindung des zylindrischen Abschnitts (42a) und der Einlasskanalbefestigungsabschnitte (42f).

2. Das Fahrzeug gemäß Anspruch 1, das ferner einen Gehäuseabschnitt (27) aufweist, in dem der stationäre Einlasskanal (30), der bewegliche Einlasskanal (31) und der Einlasskanalbewegungsmechanismus (32) angeordnet sind, und
einen Luftfilterabschnitt (28) für eine Reinigung der Luft, die in den Gehäuseabschnitt (27) fließt, und
wobei der Luftfilterabschnitt (28) auf einer gegenüberliegenden Seite zu einer Seite des Gehäuseabschnitts (27) angeordnet ist, auf der die Antriebsquelle (56) angeordnet ist.

3. Das Fahrzeug gemäß Anspruch 2, bei dem die Antriebsquelle (56), der Gehäuseabschnitt (27) und der Luftfilterabschnitt (28) in einer Längsrichtung des Fahrzeugs angeordnet sind.

4. Das Fahrzeug gemäß Anspruch 3, das ferner einen Kanalabschnitt (26) aufweist, der Luft aufweist, die durch den Luftfilterabschnitt (28) in den Gehäuseabschnitt (27) fließt, und
wobei der Luftfilterabschnitt (28) und der Kanalabschnitt (26) in einer Bewegungsrichtung (FWD) hinter dem Gehäuseabschnitt (27) angeordnet sind, und
die Antriebsquelle (56) in der Bewegungsrichtung (FWD) vor dem Gehäuseabschnitt (27) angeordnet ist.

5. Das Fahrzeug gemäß Anspruch 4, das ferner Einlasskanäle (25) aufweist, durch die Luft von außerhalb des Fahrzeugs eingelassen wird, und
die Einlasskanäle (25) in der Bewegungsrichtung (FWD) seitlich von dem Gehäuseabschnitt (27) vorgesehen sind, so dass Luft in den Kanalabschnitt (26) fließt.

6. Das Fahrzeug gemäß Anspruch 5, bei dem die Einlasskanäle (25) in der Bewegungsrichtung (FWD) auf sowohl der linken als auch der rechten Seite des Gehäuseabschnitts (27) vorgesehen sind.

7. Das Fahrzeug gemäß Anspruch 2, bei dem die Antriebsquelle (56) außerhalb des Gehäuseabschnitts (27) angeordnet ist.

8. Das Fahrzeug gemäß Anspruch 7, bei dem die Antriebsquelle eine Antriebswelle umfasst, die mit dem Einlasskanalbewegungsmechanismus verbunden ist, und
ein Loch (271), in das die Antriebswelle (56a) eingefügt ist, auf einer Seite des Gehäuseabschnitts (27) vorgesehen ist, auf der die Antriebsquelle (56) angeordnet ist.

9. Das Fahrzeug gemäß Anspruch 8, das ferner ein Abdichtungsbauglied (58) aufweist, das zwischen der Antriebswelle (56a) und dem Loch (271) vorgesehen ist.

10. Das Fahrzeug gemäß einem der vorherigen Ansprüche, bei dem die Antriebsquelle eine Antriebswelle umfasst, die mit dem Drehbauglied verbunden ist, und
die Antriebswelle angeordnet ist, um sich in einer Richtung zu erstrecken, die die vorbestimmte Richtung schneidet, welche eine Richtung ist, in der der bewegliche Einlasskanal bewegt wird.

11. Das Fahrzeug gemäß Anspruch 10, bei dem das Drehbauglied koaxial mit der Drehwelle verbunden ist.

12. Das Fahrzeug gemäß einem der Ansprüche 1 bis 11, bei dem die Spindel (41) und das Drehbauglied (44) von der Seite des Fahrzeugs aus gesehen einander schneiden.

13. Das Fahrzeug gemäß einem der Ansprüche 1 bis 11, bei dem
der Einlasskanalbewegungsmechanismus (32) ferner ein bewegliches Bauglied (43) umfasst, das sich entlang der Spindel (41) in einer Richtung bewegt, in der sich die Spindel (41) erstreckt, zusammen mit dem Einlasskanalhalteabschnitt (42) und
das Drehbauglied (44), das durch die Antriebsquelle (56) angetrieben wird, ein Hebelbauglied (55) umfasst, das das bewegliche Bauglied (43) beweglich in der Richtung trägt, in der sich die Spindel (41) erstreckt.

14. Das Fahrzeug gemäß einem der vorhergehenden Ansprüche, bei dem ein Drosselkörper (19) zwischen einer Einlassöffnung (18a) des Motors (14) und einer Öffnung (31 b) des stationären Einlasskanals (30) zu dem Motor (14) hin angeordnet ist, und
ein Luftdurchlass (31a) des beweglichen Einlasskanals (31), durch den die Luft verläuft, ein Luftdurchlass (30a) des stationären Einlasskanals (30), durch den die Luft verläuft, und ein Luftdurchlass (19a) des Drosselkörpers (19), durch den die Luft verläuft, in einer im Wesentlichen geraden Anordnung gebildet und verbunden sind.

## Revendications

1. Véhicule, comprenant:
un moteur (14) présentant un orifice d'admission (18a),
un conduit d'admission stationnaire (30) à travers lequel de l'air est amené à l'orifice d'admission (18a) du moteur (14),
un conduit d'admission mobile (31) disposé de manière déplaçable d'un côté d'admission du conduit d'admission stationnaire (30) et coopérant avec le conduit d'admission stationnaire (30) pour conduire l'air à l'orifice d'admission (18a) du moteur (14),
un mécanisme de déplacement de conduit d'admission (32) comportant un élément rotatif (44) pour déplacer le conduit d'admission mobile (31), et
une source d'entraînement (56) destinée à entraîner l'élément rotatif (44) du mécanisme de déplacement de conduit d'admission (32), et
dans lequel le conduit d'admission mobile (31) est déplacé en ligne droite dans une direction prédéterminée (A, B) entre une première position dans laquelle une ouverture (31b) du conduit d'admission mobile (31) vers le conduit d'admission stationnaire (30) est séparée d'une ouverture (30c) du conduit d'admission stationnaire (30) d'un côté d'admission, et une deuxième position dans laquelle l'ouverture (31b) du conduit d'aspiration mobile (31) vers le conduit d'admission stationnaire (30) vient en butée contre l'ouverture (30c) du conduit d'aspiration stationnaire (30) du côté d'admission,
dans lequel une direction dans laquelle sont disposés la source d'entraînement (56) et l'élément rotatifs (44) vient en intersection avec la direction prédéterminée (A, B) dans laquelle est déplacé le conduit d'admission mobile (31),
dans lequel sont prévus une pluralité de conduits d'admission stationnaires (30) et une pluralité de conduits d'admission mobiles (31),
dans lequel le mécanisme de déplacement de conduit d'admission (32) comporte un segment de maintien de conduits d'admission (42) qui maintient les conduits d'admission mobile (31), et
dans lequel le segment de maintien de conduit d'admission (42) est déplacé en ligne droite dans la direction prédéterminée (A, B), d'où les conduits d'admission mobiles (31) sont déplacés en ligne droite entre la première position et la deuxième position,
**caractérisé par le fait que**
le mécanisme de déplacement de conduit d'admission (32) comporte par ailleurs une broche (41) s'étendant en ligne droite dans une direction dans laquelle s'étend le passage d'air à travers lequel passe l'air provenant des conduits d'admission stationnaires (30),
la segment de maintien de conduit d'admission (42) est déplacé le long de la broche (41) dans une direction dans laquelle s'étend la broche (41),
le segment de maintien de conduit d'admission (42) comporte une partie cylindrique (42a) entourant un trou d'insertion principal (42b) recevant la broche (41), des parties de montage de conduit d'admission (42f) sur lesquelles sont montés les conduits d'admission mobiles (31) et des parties de bras de connexion (42g), et
les parties de bras de connexion (42g) sont formées en forme de tige sur la partie cylindrique (42a), pour connexion de la partie cylindrique (42a) et des parties de montage de conduit d'admission (42f).

2. Véhicule selon la revendication 1, comprenant par ailleurs un segment de boîtier (27) dans lequel sont disposés le conduit d'admission stationnaire (30), le conduit d'admission mobile (31) et le mécanisme de déplacement de conduit d'admission (32), et
une segment de filtre à air (28) destiné à la purification de l'air circulant vers le segment de boîtier (27), et
dans lequel le segment de filtre à air (28) est disposé d'un côté opposé à un côté du segment de boîtier (27) duquel est disposée la source d'entraînement (56).

3. Véhicule selon la revendication 2, dans lequel la source d'entraînement (56), le segment de boîtier (27) et le segment de filtre à air (28) sont disposés dans une direction longitudinale du véhicule.

4. Véhicule selon la revendication 3, comprenant par ailleurs un segment de conduit (26) présentant de l'air circulant vers le segment de boîtier (27) à travers le segment de filtre à air (28), et
dans lequel le segment de filtre à air (28) et le segment de conduit (26) sont disposés à l'arrière du segment de boîtier (27) dans une direction de déplacement (FWD), et
la source d'entraînement (56) est disposée à l'avant du segment de boîtier (27) dans la direction de déplacement (FWD).

5. Véhicule selon la revendication 4, comprenant par ailleurs des conduits d'admission (25) à travers lesquels est admis de l'air de l'extérieur du véhicule, et
les conduits d'admission (25) sont prévus latéralement par rapport au segment de boîtier (27) dans la direction de déplacement (FWD) de manière à faire circuler de l'air vers le segment de conduit (26).

6. Véhicule selon la revendication 5, dans lequel les conduits d'admission (25) sont prévus des deux côtés, gauche et droit, du segment de boîtier (27) dans la direction de déplacement (FWD).

7. Véhicule selon la revendication 2, dans lequel la source d'entraînement (56) est disposée en dehors du segment de boîtier (27).

8. Véhicule selon la revendication 7, dans lequel la source d'entraînement comprend un arbre d'entraînement connecté au mécanisme de déplacement de conduit d'admission, et
un trou (271) dans lequel est introduit l'arbre d'entraînement (56a) est prévu d'un côté du segment de boîtier (27) sur lequel est disposée la source d'entraînement (56).

9. Véhicule selon la revendication 8, comprenant par ailleurs un élément d'étanchéité (58) prévu entre l'arbre d'entraînement (56a) et le trou (271).

10. Véhicule selon l'une quelconque des revendications précédentes, dans lequel la source d'entraînement comporte un arbre d'entraînement connecté à l'élément rotatif, et
l'arbre d'entraînement est aménagé de manière à s'étendre dans une direction venant en intersection avec la direction prédéterminée qui est une direction dans laquelle se déplace le conduit d'admission mobile.

11. Véhicule selon la revendication 10, dans lequel l'élément rotatif est connecté coaxialement à l'arbre d'entraînement.

12. Véhicule selon l'une des revendications 1 à 11, dans lequel la broche (41) et l'élément rotatif (44) viennent en intersection l'une avec l'autre, tel que vu du côté du véhicule.

13. Véhicule selon l'une des revendications 1 à 11, dans lequel:
le mécanisme de déplacement de conduit d'admission (32) comporte par ailleurs un élément mobile (43) se déplaçant le long de la broche (41) dans une direction dans laquelle s'étend la broche (41), ensemble avec le segment de maintien de conduit d'admission (42), et
l'élément rotatif (44) entraîné par la source d'entraînement (56) comporte un élément de levier (55) supportant l'élément mobile (43) de manière déplaçable dans la direction dans laquelle s'étend la broche (41).

14. Véhicule selon l'une quelconque des revendications précédentes, dans lequel
un corps d'étranglement (19) est disposé entre un orifice d'admission (18a) du moteur (14) et une ouverture (31b) du conduit d'admission stationnaire (30) vers le moteur (14), et
un passage d'air (31a) du conduit d'admission mobile (31) à travers lequel passe l'air, un passage d'air (30a) du conduit d'admission stationnaire (30) à travers lequel passe l'air et un passage d'air (19a) du corps d'étranglement (19) à travers lequel passe l'air sont formés et connectés selon un aménagement sensiblement rectiligne.
